(19) Europäisches Patentamt
European Patent Office
Office européen des brevets

(11) **EP 4 099 250 B1**

(12) **EUROPEAN PATENT SPECIFICATION**

(45) Date of publication and mention
of the grant of the patent:
**05.03.2025  Bulletin 2025/10**

(21) Application number: **21176798.3**

(22) Date of filing: **31.05.2021**

(51) International Patent Classification (IPC):
**G06Q 10/0639** (2023.01)    **G06Q 30/0282** (2023.01)
**G06Q 30/0203** (2023.01)

(52) Cooperative Patent Classification (CPC):
**G06Q 10/06395; G06Q 30/0203; G06Q 30/0282**

(54) **METHOD AND DEVICE FOR DETERMINING QUALITY OF USER EXPERIENCE OF PRODUCTS**

**VERFAHREN UND VORRICHTUNG ZUR BESTIMMUNG DER BENUTZERERLEBNISQUALITÄT VON PRODUKTEN**

**PROCÉDÉ ET DISPOSITIF PERMETTANT DE DÉTERMINER LA QUALITÉ DE L'EXPERIENCE D'UTILISATEUR DE PRODUITS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2022  Bulletin 2022/49**

(73) Proprietor: **Siemens Aktiengesellschaft 80333 München (DE)**

(72) Inventors:
• **., Abhilasha**
  **Allahabad, U.P 211003 (IN)**

• **ATMAKURI, VeeraVenkata**
  **Hyderabad, Andra Pradesh 500013 (IN)**

(74) Representative: **Horn Kleimann Waitzhofer Schmid-Dreyer**
**Patent- und Rechtsanwälte PartG mbB**
**Theresienhöhe 12**
**80339 München (DE)**

(56) References cited:
**US-A1- 2019 333 083    US-A1- 2020 226 479**

## Description

The present invention relates to a method and a device for determining quality of user experience of a product.

User experience forms a part of the field of Human Computer Interaction (HCI) which has innate theoretical concepts, epistemological hypotheses and methodologies from a diversity of disciplines. The measures related to user experience are strongly related to humanities and can be regarded as naive or easy to go, particularly when the concepts to be measured are ill-defined. Measurability of quality of user experience has not been effectively possible since it subsumes a range of different constructs which may be vague and include dispositions such as happiness, surprise, disgust, love, etc. The current methods are limited to quantifying user research, checking statistical significance and discussions on enduring statistical controversies. However, these methods fail to classify different constructs of user experience and quantify the user experience to determine its quality.

Currently, there is no way in which the user experience of a product can be quantified effectively to determine its quality. Additionally, there is no way to provide recommendations to designers to improve the quality of the user experience of the product. Therefore, there is a need for a method and device which enables effective determination of quality of user experience of the product.

US 2020/0226479 A1 describes a platform and taxonomy for analyzing the results of testing data, such as data generated through usability test of the User Experience (UX) of a software product or service. The analysis outputs actions that can be performed automatically to modify the software product or service under test. The usability test results that are analyzed can include qualitative data, such as words, sentences, phrases, comments, and or other (e.g., natural language) information that have been provided by end-users engaged in the usability testing. The platform and taxonomy described herein provided a framework through which a semantic analysis of results can be performed, with actions performed based on the semantic analysis.

US 2019/0333083 A1 discloses systems and methods for quantitative assessment of a user experience of a digital product where embodiments provide for the quantitative assessment of the UX of the digital product by assigning, by one or more hardware processors, a default value to each of a plurality of Key Performance Attributes (KPAs), computing a set of weightages, computing, based upon the set of weightages and the default value assigned to each of the plurality of KPAs, a plurality of score values, generating, by using a set of relative weightage values, a total cut-off score to assess the UX of the digital product, categorizing the digital product in either one of pre-defined categories based upon a comparison of the total cut-off score and a UX Assessment score.

The object of the invention is therefore to provide a method and a device that enables effective determination of quality of user experience of a product.

The invention achieves the object by a method according to the claims of determining quality of user experience of a product. User experience includes how a user interacts with and experiences a product or a service. User experience includes perception of a user of the product in use and the functionality of the product. The method comprises receiving an evaluation report of the user experience of the product. The evaluation report comprises a plurality of evaluation metrics. In an embodiment, the evaluation report may include a plurality of questions associated with the product and a plurality of responses to the questions. The evaluation metrics may be derived from the responses available in the evaluation report. The evaluation report may be received from the user of the product. Alternatively, an automated analysis of the product may be performed to generate the evaluation report. In a further embodiment, the evaluation report may include text-based response, numerical rating of the product such as a Likert scale evaluation, etc.

The method comprises mapping the evaluation metrics of the evaluation report to at least one parameter from a set of parameters associated with the product. The parameters may be, for example, functionality of the product, reliability of the product, usability of the product, convenience of use of the product, and desirability and delight of the product. The parameter of functionality may aim at evaluating if a fundamental job expected out of the product or a feature in the product is accomplished. Similarly, the parameter 'usability' aims to evaluate the ease of use of the product. The parameter 'reliability' may aim to evaluate the availability and accuracy of output of the product. The parameter 'convenience of use' may aim to evaluate the workability of the product as desired. Additionally, the parameter 'desirability/delight' may aim to evaluate the aspect of appropriateness, positivity and surprise element associated with the product. In an embodiment, the mapping may be performed using a trained machine learning model. Advantageously, mapping of the evaluation metrics to the parameters of the product enables determination of a quality of the parameter associated with the product.

The method further comprises computing a score associated with the at least one parameter based on the mapped evaluation metrics, using the trained machine learning model. In an embodiment, each of the responses in the evaluation report may be assigned a weight, based on which the score associated with the parameter may be computed. The method further comprises determining a cumulative score associated with the user experience of the product based on the computed score. The cumulative score may be, for example an addition of the scores computed for all the parameters from the set of parameters associated with the product. Additionally, the method comprises determining the quality of the user experience of the product based on the cumulative score. Advantageously, the method enables identification of debt accumulated in the user experience of the product based on the computed score. Therefore, the quality of the user experience can be effectively improved by the user.

According to a preferred embodiment, the method comprises generating a recommendation indicating at least one action to improve the quality of the user experience of the product. The recommendation may be generated using the trained machine learning model. In an embodiment, the recommendation may be provided for each parameter based on the computed score. The recommendation may be based on the responses present in the evaluation report. In a further embodiment, the at least one action in the recommendation may include, for example, design changes that may be performed to improve the user experience of the product. Additionally, the at least one action may include performing experience benchmarking, addition/removal of functional features, synchronization of functional elements in the product, etc. The recommendation may be presented on an output unit to the user. Advantageously, the recommendation enables the user to improve the user experience of the product or minimize the debt accumulated in the user experience of the product.

According to an embodiment, the method further comprises providing an evaluation questionnaire to a user. The evaluation questionnaire comprises a plurality of questions associated with the user experience of the product. In the embodiment, the evaluation questionnaire aims at receiving manual input from the user on the user experience of the product. The evaluation questionnaire may include the questions whose responses may include multiple choices. Further, the method comprises requesting a response from the user to the evaluation questionnaire. The responses in the evaluation questionnaire may be chosen by the user using a mouse click. Alternatively, the user may also be requested to provide a text-based response to the questions in the evaluation questionnaire. In a further embodiment, the evaluation questionnaire may be configured in manner to show one question at a time to the user. Therefore, once a response has been provided/selected to a question by the user, the next question on the questionnaire may appear on the display unit. The method further comprises receiving the evaluation report from the user, wherein the evaluation report is based on the evaluation questionnaire. The evaluation report may be generated once the user has completed responding to the evaluation questionnaire. The evaluation report may be a collection of the responses provided by the user. Advantageously, the method enables generating the evaluation report based on user feedback. Therefore, the user experience of the product may be improved based on the user feedback.

According to an embodiment, mapping the evaluation metrics of the evaluation report to the at least one parameter comprises identifying from the evaluation questionnaire at least one question pertaining the at least one question pertaining to the at least one parameter associated with the user experience of the product. In an embodiment, the evaluation questionnaire may include a plurality of questions associated with one parameter. Each of the questions may enable computing the score associated with the parameter. The at least one question may be identified based on a context associated with the question. The method further comprises classifying the response to the at least one question pertaining to the at least one parameter, into a group. In an embodiment, classifying the response includes assigning labels to the responses based on the context analysis. Additionally, the method comprises assigning the classified responses to the at least one parameter from the set of parameters associated with the user experience of the product. Advantageously, the classified responses enable effective computation of the score associated with the parameter(s).

According to an embodiment, generating the recommendation indicating at least one action to improve the quality of the user experience of the product comprises identifying one or more attributes associated with each of the parameters. The attributes are factors which define the parameters. For example, the parameter 'functionality' has attributes such as, but not limited to, information organization, relevant information availability, perceived accuracy of feature associated with the product, understandability of feature, searchability of the feature, information architecture, transparency and traceability of the feature, predictability, sortability, system feedback, hardware compatibility, software compatibility, semantic compatibility, help and documentation quality/relevance, task assistance, information hierarchy, processing speed. Similarly, the parameter 'usability' has attributes such as, but not limited to ease of use/efficiency of the product/feature, installation and upgradation, memorability/learnability, minimal action requirement, and controllability. The parameter 'reliability' has the attributes including, but not limited to, system state visibility, error visibility, error prevention, error rectification, confidentiality/integrity, security and privacy, and software logo/brand/iconography. The parameter 'convenience of use' has the attributes such as mental demand, temporal demand, performance, mental model mapping, customizability, accessibility, etc. Similarly, the parameter 'desirability/delight' has the attributes such as design appropriateness, software color scheme, satisfaction, visual clutter, spacing and font consistency, title appropriateness, header hierarchy, presentation, animation, tactile transitions and interactions, sound, frustration, etc. In an embodiment, the attributes associated with the parameters may be stored in a database in the form of a look-up table.

The method comprises determining at least one of the one or more attributes contributing to a low score associated with the parameter. This may be determined based on the evaluation metrics in the evaluation report.

The trained machine learning model may be configured to evaluate the weights associated with the responses in the evaluation report and identify the attributes contributing to the low score. Further, the method comprises generating a recommendation to improve the score associated with the parameter. The recommendation includes at least one action based on the determined attribute. Advantageously, the invention enables not just the determination of quality of the user experience but also provides recommendations to improve the quality.

According to a further embodiment, determining the at least one of the one or more attributes contributing to the low score associated with the parameter comprises determining from the evaluation metrics the one or more attributes associated with the parameter. The responses in the evaluation report may be analyzed to determine the one or more attributes associated with the parameter. Further, the method comprises assigning a weight to each of the one or more attributes based on the evaluation metrics. In an embodiment, the weight may be assigned based on the response in the evaluation report. The method further comprises identifying at least one attribute with a weight lower than a pre-defined threshold. Advantageously, the attributes contributing to the low score may be accurately identified.

According to an embodiment, determining the quality associated with the user experience of the product comprises comparing the cumulative score with a first quality score threshold, a second quality score threshold, a third quality score threshold and a fourth quality score threshold. If the cumulative score for the at least one parameter is above or equal to the first quality score threshold, the quality associated with the user experience is determined to be strong. If the cumulative score for the at least one parameter is below or equal to the second quality score threshold, the quality associated with the user experience is determined as good. If the cumulative score for the at least one parameter is below or equal to the third quality score threshold, the quality associated with the user experience is determined as fair. Further, if the cumulative score for the at least one parameter is below or equal to the fourth quality score threshold, the quality associated with the user experience is determined as poor. Advantageously, the quality of the user experience is accurately determined based on the cumulative score.

According to another embodiment, the method further comprises comparing the computed score with a first parameter quality score threshold, a second parameter quality score threshold, a third parameter quality score threshold and a fourth parameter quality score threshold. If the computed score for the at least one parameter is above or equal to the first parameter quality score threshold, the quality associated with the parameter is determined as strong. If the computed score for the at least one parameter is below or equal to the second parameter quality score threshold, the quality associated with the parameter is determined as good.

If the computed score for the at least one parameter is below or equal to the third parameter quality score threshold, the quality associated with the parameter is determined as fair. If the computed score for the at least one parameter is below or equal to the fourth parameter quality score threshold, the quality associated with the parameter is determined as poor. Advantageously, each parameter associated with the user experience of the product is evaluated and scored. This enables accurate determination of areas of improvement for the user experience.

According to an embodiment, the method further comprises training the machine learning model to determine the quality associated with the user experience of the product. For example, the machine learning model may be trained using historical evaluation data associated with the product. Alternatively, the model may be trained using evaluation data associated with other products. The evaluation report associated with other products may be provided to the machine learning model, based on which determination of quality of the user experience associated with such products may be made. In an embodiment, the outcome of the machine learning model may be compared with a pre-analyzed quality associated with the products and thereafter the model may be adjusted to improve the working of the model. Advantageously, training the machine learning model improves the accuracy of computation of score associated with the user experience of the product.

According to a preferred embodiment, the machine learning model is a deep neural network. The deep neural network may have an input layer which consumes the input data such as the evaluation metrics in the evaluation report. The model may further include a plurality of hidden layers having neurons. The neurons in each hidden layer may compute an activation function which may be passed on to the subsequent hidden layers in the model. The connection between two neurons of subsequent hidden layers may be associated with a weight. The weight may define the influence of input to an output for the next neuron and therefore for an overall final output. The weights may be updated during the training process of the model, thereby enabling effective computation of the score associated with the parameter/user experience of the product. The model may further include an output layer which provides the output computed by the hidden layers.

The object of the invention is also achieved by a device for determining a quality of a user experience of a product. The device comprises one or more processing units and a memory coupled to the one or more processing units. The memory comprises a quality module configured to perform the method steps as described above, using at least one trained machine learning model.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:

FIG 1    illustrates a block diagram of a device in which an embodiment for determining a quality of a user experience of a product can be implemented.

FIG 2    illustrates a flowchart of a method of determining a quality of a user experience of a product, according to an embodiment of the invention.

FIG 3    illustrates a flowchart of a method of mapping evaluation metrics of evaluation report to at least one parameter, according to an embodiment of the invention.

FIG 4    illustrates a flowchart of a method of generating a recommendation indicating an action to improve the quality of the user experience of the product, according to an embodiment of the invention.

FIG 5    illustrates a flowchart of a method of determining the attribute contributing to low score associated with the parameter, according to an embodiment of the invention.

FIG 6    illustrates a flowchart of a method of determining the quality associated with the user experience of the product, according to an embodiment of the invention.

FIG 7    illustrates a flowchart of a method of determining quality associated with a parameter associated with the user experience of the product, according to an embodiment of the invention.

FIG 8    illustrates an embodiment of working of the machine learning model for determining the quality of the user experience of the product, according to an embodiment of the invention.

FIG 9    illustrates a graphical user interface indicating the quality of the user experience of the product and recommendations to improve the quality, according to an embodiment of the present invention.

FIG 10   illustrates yet another graphical user interface indicating the quality of the parameter associated with the product and recommendations to improve the quality of the parameter, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

In the following, the solution according to the invention is described with respect to the claimed providing systems as well as with respect to the claimed methods.

Features, advantages or alternative embodiments herein can be assigned to the other claimed objects and vice versa. In other words, claims for the providing systems can be improved with features described or claimed in the context of the methods. In this case, the functional features of the method are embodied by objective units of the providing system.

Furthermore, in the following the solution according to the invention is described with respect to methods and devices for determining a quality of user experience of a product as well as with respect to methods and devices for training a machine learning model for determining a quality of user experience of a product. Features, advantages or alternative embodiments herein can be assigned to the other claimed objects and vice versa. In other words, claims for methods and devices for training the machine learning model for determining a quality of user experience of a product can be improved with features described or claimed in context of the methods and systems for determining a quality of user experience of a product, and vice versa. In particular, the trained machine learning model of the methods and devices for determining a quality of user experience of a product can be adapted by the methods and devices for training the machine learning model for determining a quality of user experience of a product. Furthermore, the input data can comprise advantageous features and embodiments of the training input data, and vice versa.

Furthermore, the output data can comprise advantageous features and embodiments of the output training data, and vice versa.

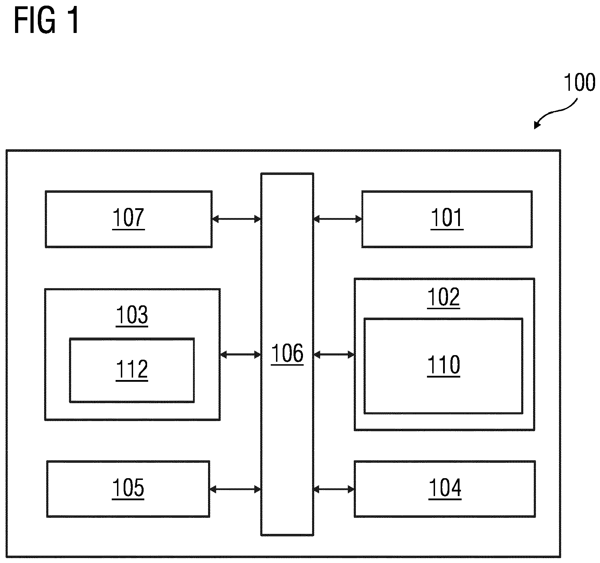

FIG 1 is a block diagram of a device 100 in which an embodiment can be implemented, for example, as a device 100 for determining a quality of user experience of a product, configured to perform the processes as described therein. In FIG 1, said device 100 comprises a processing unit 101, a memory 102, a storage unit 103, an input unit 104, a bus 106, an output unit 105, and a network interface 107.

The processing unit 101, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

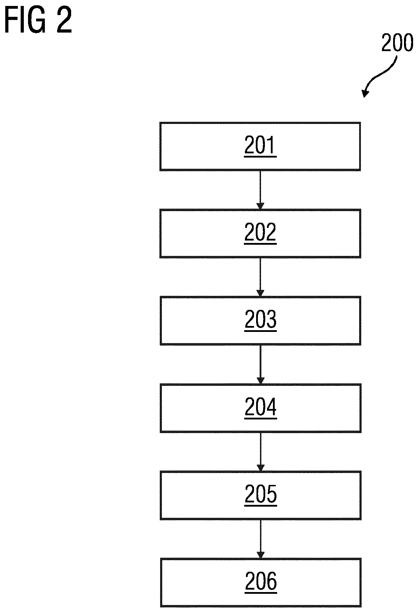

The memory 102 may be volatile memory and non-volatile memory. The memory 102 may be coupled for communication with said processing unit 101. The processing unit 101 may execute instructions and/or code stored in the memory 102. A variety of computer-readable storage media may be stored in and accessed from said memory 102. The memory 102 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 102 includes a quality module 110 stored in the form of machine-readable instructions on any of said above-mentioned storage media and may be in communication to and executed by processor 101. When executed by the processor 101, the quality module 110 causes the processor 101 to determine a quality of user experience of a product. Method steps executed by the processor 101 to achieve the abovementioned functionality are elaborated upon in detail in FIG 2, 3, 4, 5, 6, and 7.

The storage unit 103 may be a non-transitory storage medium which stores a database 112. The database 112 is a repository of evaluation questionnaires and evaluation reports related to one or more products. The input unit 104 may include input means such as keypad, touch-sensitive display, camera (such as a camera receiving gesture-based inputs), etc. capable of receiving input signal. The bus 106 acts as interconnect between the processor 101, the memory 102, the storage unit 103, the input unit 104, the output unit 105 and the network interface 107.

Those of ordinary skilled in the art will appreciate that said hardware depicted in FIG 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A device 100 in accordance with an embodiment of the present disclosure includes an operating system employing a graphical user interface. Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. Said operating system is modified or created in accordance with the present disclosure as described.

Disclosed embodiments provide systems and methods for determination of a quality of user experience of a product.

FIG 2 illustrates a flowchart of a method 200 of determining a quality of a user experience of a product, according to an embodiment of the invention. At step 201, the method includes receiving an evaluation report of the user experience of the product. The evaluation report includes a plurality of evaluation metric associated with the user experience of the product. The evaluation report is received from a user of the product. In an embodiment, the user is provided an evaluation questionnaire on a display unit of a device associated with the user. The questionnaire includes a plurality of questions associated with the user experience, particularly related to one or more parameters associated with the product. In a further embodiment, the parameters include functionality of the product, usability of the product, reliability of the product, convenience of use of product, desirability and delight associated with the product.

In an embodiment, each parameter has a plurality of associated attributes. The attributes are factors which define the parameters. For example, the parameter 'functionality' has attributes such as, but not limited to, information organization, relevant information availability, perceived accuracy of feature associated with the product, understandability of feature, searchability of the feature, information architecture, transparency and traceability of the feature, predictability, sortability, system feedback, hardware compatibility, software compatibility, semantic compatibility, help and documentation quality/relevance, task assistance, information hierarchy, processing speed. Similarly, the parameter 'usability' has attributes such as, but not limited to ease of use/efficiency of the product/feature, installation and upgradation, memorability/learnability, minimal action requirement, and controllability. The parameter 'reliability' has the attributes including, but not limited to, system state visibility, error visibility, error prevention, error rectification, confidentiality/integrity, security and privacy, and software logo/brand/iconography. The parameter 'convenience of use' has the attributes such as mental demand, temporal demand, performance, mental model mapping, customizability, accessibility, etc. Similarly, the parameter 'desirability/delight' has the attributes such as design appropriateness, software color scheme, satisfaction, visual clutter, spacing and font consistency, title appropriateness, header hierarchy, presentation, animation, tactile transitions and interactions, sound, frustration, etc.

The questionnaire may include a set of answers associated with each question, out of which the user is requested to input a choice of answer. A weight is associated with each answer, based on which the evaluation metrics may be defined. In an alternate embodiment, the evaluation report may be automatically generated by the processing unit based on an automated analysis of the parameters of the product. For example, the processing unit may be configured to perform a set of automated tasks associated with the product, based on which the evaluation report may be generated. The tasks may be chosen such that the performance of the product is evaluated. Therefore, each parameter associated with the product is evaluated.

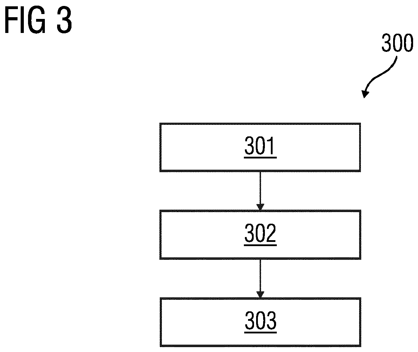

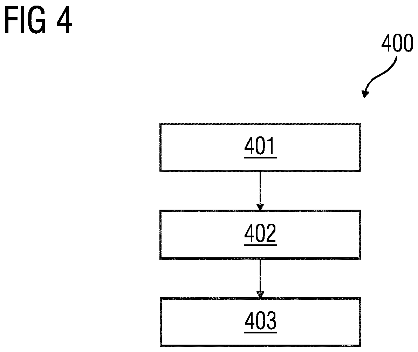

The method 200 further includes a step 202 of mapping the evaluation metrics of the evaluation report to at least one parameter associated with the product. The method steps associated with the mapping of the evaluation metrics to the parameters is disclosed in further detail in FIG 3. In particular, the evaluation metrics enable identification of quality of each parameter associated with the product. The mapping is performed using a trained machine learning model, such as a deep neural network. At step 203, the trained machine learning model is configured to compute a score associated with the at least one parameter, based on the evaluation metrics. The score is a measure of quality associated with the parameter of the product. For example, the score may be depicted as a percentage score. Alternatively, the score may also be depicted on a Likert scale. Further, at step 204, a cumulative score associated with the user experience of the product is computed based on the computed score associated with the at least one parameter. The cumulative score may be a sum of all the scores associated with the parameters associated with the product. At step 205, the quality associated with the user experience of the product is determined based on the cumulative score. The cumulative score may reflect the quality of the product. Additionally, at step 205, the trained machine learning model generates a recommendation indicating at least one action to improve the quality of the user experience of the product. In an alternate embodiment, the recommendation may include an action to maintain the quality of the user experience of the product, if the quality is above a threshold. The method steps associated with generating the recommendation is disclosed in further detail in FIG 4.

FIG 3 illustrates a flowchart of a method 300 of mapping the evaluation metrics of the evaluation report to the at least one parameter, according to an embodiment of the invention. At step 301, at least question pertaining to the at least one parameter is identified from the evaluation questionnaire. In an embodiment, one question may relate to one or more parameters associated with the product. The machine learning model performs a context-based analysis to identify the questions pertaining to the at least one parameter associated with the product. Further, at step 302, the response to the questions is classified into a group and at step 303, the classified responses are assigned to the at least one parameter associated with the product.

Once the evaluation metrics are mapped to the parameters, the machine learning model computes the score associated with the parameter. In an embodiment, an average score is calculated based on the weight associated with each question. Further, a mean and standard deviation associated with the average score is calculated, following which a normalization of the average score is performed using the below mathematical expression:

$$\frac{(x - \mu)}{\sigma}$$

Where x is average score, $\mu$ is the mean of the average score and $\sigma$ is the standard deviation of the average score. A raw parameter score is obtained by summation of normalized scores with each question associated with the parameter. A percentile score is calculated for the raw parameter score. The percentile score is the score associated with the parameter.

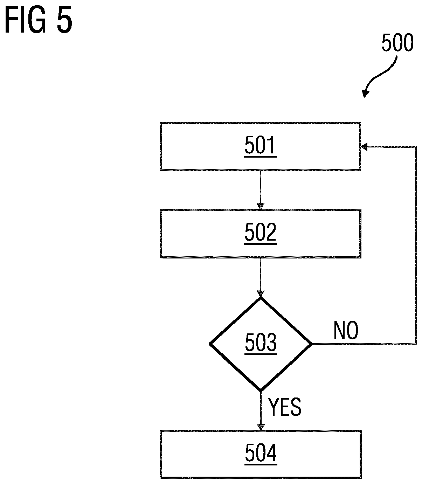

FIG 4 illustrates a flowchart of a method 400 of generating a recommendation indicating the at least one action to improve the quality of the user experience of the product, according to an embodiment of the present invention. At step 401, the attributes associated with each of the parameters are identified by the machine learning model. Further, at step 402, at least one attribute contributing to a low score associated with the parameter is determined by the machine learning model. This may be performed based on an attribute score. The method steps associated with determining the attributes contributing to the low score of the parameter is disclosed in further detail in FIG 5. Further, at step 403, the recommendation is generated based on the identified one or more attributes contributing to the low score associated with the parameter. The recommendation includes at least one action that the user may perform to improve the quality of the user experience. Alternatively, the recommendation may also include actions that the user may perform to maintain the quality of the user experience if the attribute scores are equal to or higher than the pre-defined threshold.

FIG 5 illustrates a flowchart of a method 500 of determining the at least one attribute contributing to the low score associated with the parameter, according to an embodiment of the present invention. At step 501, the one or more attributes associated with the parameter are identified by the machine learning model. At step 502, the attribute score for each of the one or more attributes is computed.

The evaluation report generated from the evaluation questionnaire is mapped to a second questionnaire. The second questionnaire may include a plurality of questions associated with the attributes of the parameters. The evaluation metrics from the evaluation report may be used to obtain an attribute score for each attribute associated with the parameter, based on the weights associated with the responses. The normalized scores associated with the parameters may be used in computing the attribute scores. At step 503, the attribute score is compared with a pre-defined threshold to determine if the attribute score is lower or higher than the pre-defined threshold. At step 504, the one or more attributes which may have an attribute score lower than the pre-defined threshold are identified to be contributing to the low score associated with the parameter.

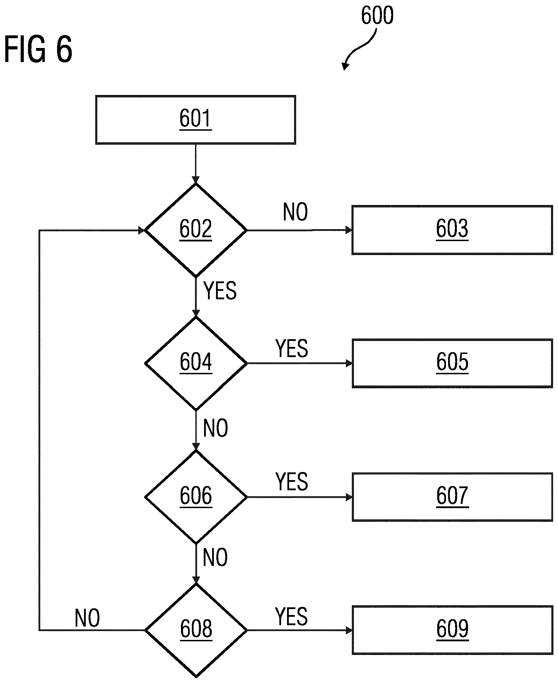

FIG 6 illustrates a flowchart of a method of determining the quality associated with the user experience of the product, according to an embodiment of the present invention. At step 601, the cumulative score associated with the user experience is received. At step 602, the cumulative score is compared with a first quality score threshold. If the cumulative score is lower than the first quality score threshold, the cumulative score is compared with a second quality score threshold, at step 604. If the cumulative score is not lower than the first quality score threshold, the quality of the user experience is determined as strong at step 603. Similarly, if the cumulative score is equal to the second quality score threshold, the quality of the user experience of the product is determined as good at step 605. However, if the cumulative score is lower than the second quality score threshold, the cumulative score is compared with a third quality score threshold at step 606. If the cumulative score meets the third quality score threshold, the user experience of the product is determined as fair at step 607. However, if the third quality score threshold is not met the cumulative score is compared with a fourth quality score threshold at step 608. If the cumulative score meets the fourth quality score threshold, the user experience of the product is determined as poor.

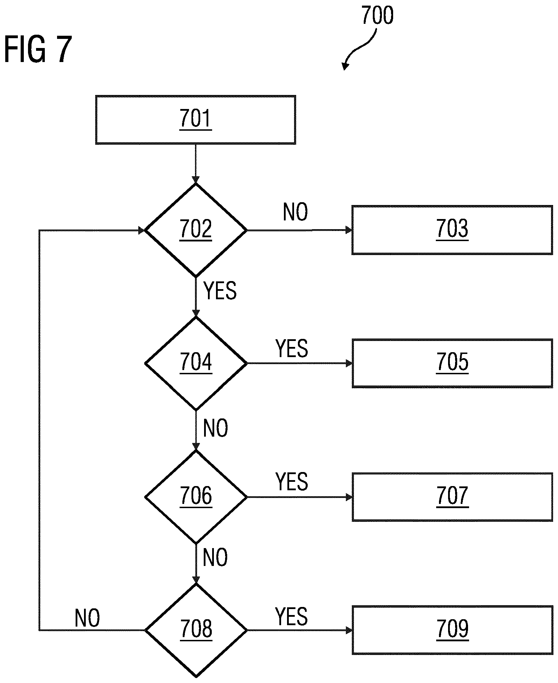

FIG 7 illustrates a flowchart of a method 700 of determining the quality of a parameter associated with the product, according to an embodiment of the present invention. At step 701, the parameter score associated with the parameter is received. At step 702, the parameter score is compared with a first parameter quality score threshold. If the parameter score is lower than the first parameter quality score threshold, the parameter score is compared with a second parameter quality score threshold, at step 704. If the parameter score is not lower than the first parameter quality score threshold, the quality of the parameter is determined as strong at step 703. Similarly, if the parameter score is equal to the second parameter quality score threshold, the quality of the parameter of the product is determined as good at step 705. However, if the parameter score is lower than the second parameter quality score threshold, the parameter score is compared with a third parameter quality score threshold at step 706. If the parameter score meets the third parameter quality score threshold, the parameter of the product is determined as fair at step 707. However, if the third parameter quality score threshold is not met the parameter score is compared with a fourth parameter quality score threshold at step 708. If the parameter score meets the fourth parameter quality score threshold, the parameter of the product is determined as poor.

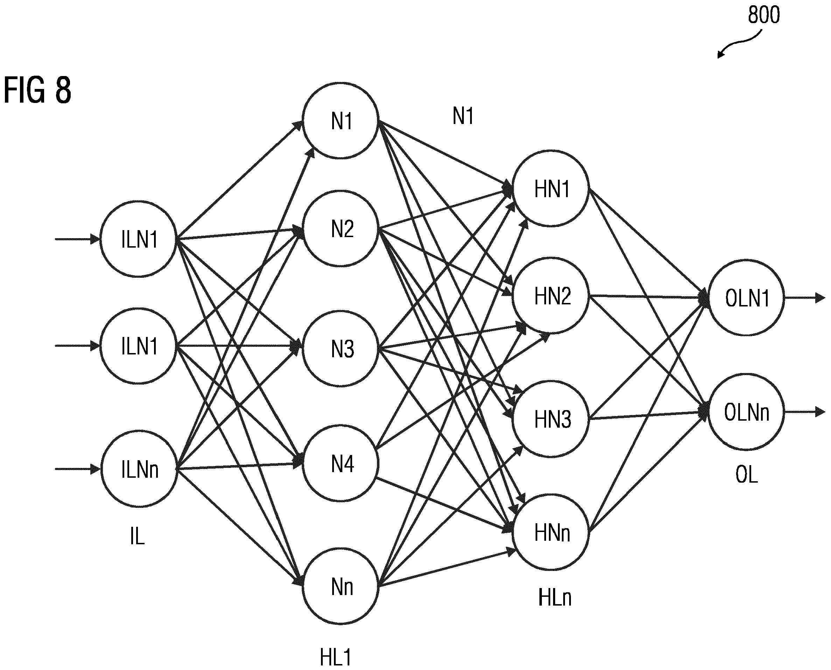

FIG 8 illustrates a working of the machine learning model for determining the quality of the user experience of the product, according to an embodiment of the present invention. The machine learning model is a deep neural network (DNN) 800. The DNN 800 includes an input layer IL comprising a plurality of neurons ILN1, ILN2, ILNn. Further, the DNN 800 includes a plurality of hidden layers HL1, HLn which are configured to process the input data to provide an output. Each hidden layer HL1, HLn has a plurality of neurons N1, N2, N3, N4, Nn, HN1, HN2, HN3, HN4, HNn. The neurons pass a signal to the other neurons in the DNN 800 based on the input data. The neurons compute an activation function which mimics the signal. If the incoming neurons result in a value greater than a threshold, the output is passed to the next layer in the DNN 800. The connection between neurons of successive layers is associated with a weight which defines the influence of the input to the output for the next neuron. The weights are updated iteratively to determine the score associated with the parameter more accurately. In an embodiment, the DNN 800 is trained to enable the weights to be iteratively updated. The DNN 800 further includes an output layer OL which outputs the computed score associated with the parameter of the product. The output layer OL may have several neurons OLN1, OLNn.

In a further embodiment, the DNN 800 is trained using historical evaluation data associated with the product. Alternatively, the model may be trained using evaluation data associated with other products. The evaluation report associated with other products may be provided to the DNN 800, based on which determination of quality of the user experience associated with such products may be made. In an embodiment, the outcome of the DNN 800 may be compared with a pre-analyzed quality associated with the products and thereafter the model may be adjusted to improve the working of the model.

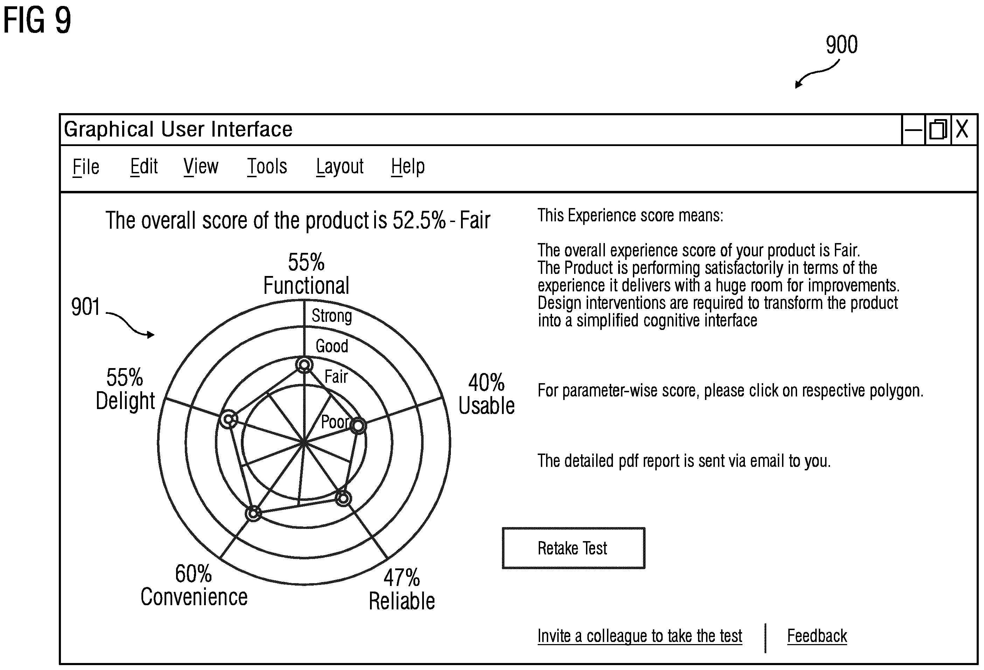

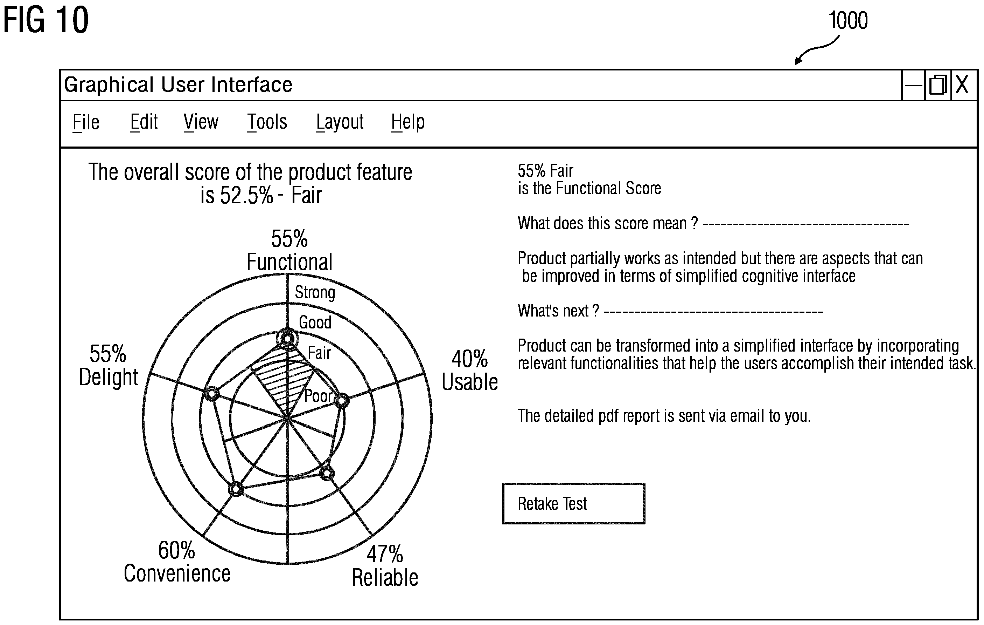

FIG 9 illustrates a graphical user interface (GUI) 900 indicating the quality of the user experience of the product and recommendations to improve the quality of the user experience, according to an embodiment of the present invention. The GUI 900 includes a graphical representation 901 illustrating the score associated with the user experience of the product. For example, in the present embodiment, the score associated with the user experience of the product is 52.5%. The graphical representation 901 is a spider chart depicting parameter scores associated with each of the parameters of the product. The GUI 900 also includes an analysis of the score of the user experience of the product along with a recommendation indicating a scope of improvement. FIG 10 is yet another illustration of a GUI 1000 depicting the quality of the user experience of the product. The GUI 1000 includes an analysis of the parameter score associated with the parameter of the product. For example, in the present embodiment, the GUI 1000 includes an analysis of the parameter functionality of the product. The analysis further includes a recommendation to improve the parameter score associated with functionality of the product. In an embodiment, the recommendation may be generated based on a look-up table. The look-up table may include a plurality of recommendations based on parameter score ranges. Based on the parameter score determined by the machine learning model, the recommendation may be extracted from the look-up table and provided as a notification to the user.

The advantage of the invention is the method and device enable effective determination of quality of the user experience associated with a product. The invention enables management of user experience of the product and provides information to product owners on how the users perceive the product. Additionally, the invention enables determining if the product is delivering its intended experience to the user. The invention also provides a method to calculate a user experience debt accumulated in the product over a period of time.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

LIST OF REFERENCE NUMBERS

**[0055]**

| | |
|---|---|
| 100 | Device |
| 101 | Processing unit |
| 102 | Memory |
| 103 | Storage unit |
| 104 | Input unit |
| 105 | Output unit |
| 106 | Bus |
| 107 | Network interface |
| 110 | Quality module |
| 112 | Database |
| 800 | Machine learning model |
| 900 | Graphical user interface |
| 901 | Graphical representation illustrating user experience score |
| 1000 | Graphical user interface |

**Claims**

1. A method (200) of determining a quality of a user experience of a product, the method (200) comprising:

generating, by a processing unit (101), an evaluation report of the user experience of the product;
receiving, by the processing unit (101), the evaluation report of the user experience of the product, wherein the evaluation report comprises a plurality of evaluation metrics;
mapping, using a trained machine learning model (800), the evaluation metrics of the evaluation report to at least one parameter from a set of parameters associated with the product, wherein the parameters affect the user experience of the product;
computing, by the trained machine learning model (800), a score associated with the at least one parameter based on the mapped evaluation metrics;
determining, by the processing unit (101), a cumulative score associated with the user experience of the product based on the computed score associated with the at least one parameter; and
determining, by the processing unit (101), the quality associated with the user experience of the product based on the cumulative score;
wherein the evaluation report of the user experience of the product is automatically generated by the processing unit based on an automated analysis of the parameters associated with the product, the processing unit being configured to perform a set of automated tasks associated with the product, based on which the evaluation report is generated, and wherein the tasks are chosen such that the performance of the product is evaluated, such that each parameter associated with the product is evaluated.

2. The method (200) according to claim 1, further comprising generating, by the trained machine learning model (800), a recommendation indicating at least one action to improve the quality of the user experience of the product.

3. The method (200) according to claim 2, wherein the parameters comprise functionality, usability, reliability, convenience of use, and/or desirability/delight parameters. .

4. The method (200) according to claim 3, wherein each parameter has a plurality of associated attributes defining the parameter, wherein

the functionality parameter has attributes information organization, relevant information availability, perceived accuracy of feature associated with the product, understandability of feature, searchability of the feature, information architecture, transparency and traceability of the feature, predictability, sortability, system feedback, hardware compatibility, software compatibility, semantic compatibility, help and documentation quality/relevance, task assistance, information hierarchy and/or processing speed;
the usability parameter has attributes ease of use/efficiency of the product/feature, installation and upgradation, memorability/learnability, minimal action requirement, and/or controllability;
the reliability parameter has the attributes system state visibility, error visibility, error prevention, error rectification, confidentiality/integrity, security and privacy, and/or software logo/brand/iconography;
the convenience of use parameter has attributes mental demand, temporal demand, performance, mental model mapping, customizability, and/or accessibility;

the desirability/delight parameter has attributes design appropriateness, software color scheme, satisfaction, visual clutter, spacing and font consistency, title appropriateness, header hierarchy, presentation, animation, tactile transitions and interactions, sound and/or frustration.

5. The method (200) according to claim 3 or 4 and claim 2, wherein generating the recommendation indicating at least one action to improve the quality of the user experience of the product comprises:

identifying, by the trained machine learning model (800), one or more attributes associated with each of the parameters from a database;
determining, by the trained machine learning model (800), at least one of the one or more attributes contributing to a low score associated with the parameter, based on the evaluation metrics in the evaluation report; and
generating, by the trained machine learning model (800), the recommendation to improve the score associated with the parameter, wherein the recommendation comprises at least one action based on the determined attribute.

6. The method (200) according to claim 5, wherein determining the at least one of the one or more attributes contributing to the low score associated with the parameter comprises:

computing an attribute score associated with each of the one or more attributes associated with the parameter;
comparing the attribute score with a pre-defined threshold; and
identifying the at least one attribute with the attribute score lower than the pre-defined threshold.

7. The method (200) according to any one of claims 1 - 6, wherein determining the quality associated with the user experience of the product comprises:

comparing the cumulative score with a first quality score threshold, a second quality score threshold, a third quality score threshold and a fourth quality score threshold;
if the cumulative score for the at least one parameter is above or equal to the first quality score threshold, determining the quality associated with the user experience as strong;
if the cumulative score for the at least one parameter is below or equal to the second quality score threshold, determining the quality associated with the user experience as good;
if the cumulative score for the at least one parameter is below or equal to the third quality score threshold, determining the quality associated with the user experience as fair; and
if the cumulative score for the at least one parameter is below or equal to the fourth quality score threshold, determining the quality associated with the user experience as poor.

**8.** The method (200) according to claim 7, further comprising:

comparing the computed score with a first parameter quality score threshold, a second parameter quality score threshold, a third parameter quality score threshold and a fourth parameter quality score threshold;

if the computed score for the at least one parameter is above or equal to the first parameter quality score threshold, determining the quality associated with the parameter as strong;

if the computed score for the at least one parameter is below or equal to the second parameter quality score threshold, determining the quality associated with the parameter as good;

if the computed score for the at least one parameter is below or equal to the third parameter quality score threshold, determining the quality associated with the parameter as fair; and

if the computed score for the at least one parameter is below or equal to the fourth parameter quality score threshold, determining the quality associated with the parameter as poor.

**9.** The method (200) according to any one of claims 1 - 8, further comprising training the machine learning model (800) to determine the quality associated with the user experience of the product.

**10.** The method (200) according to any of the aforementioned claims, wherein the machine learning model (800) is a deep neural network.

**11.** A device (100) for determining a quality of a user experience of a product, the device (100) comprising:

one or more processing units (101); and

a memory (102) coupled to the one or more processing units (101), the memory comprising a quality module (110) configured to perform the method steps as claimed in any one of claims 1 to 10, using at least one trained machine learning model (800).

**12.** A computer program product comprising machine readable instructions, that when executed by one or more processing units (101), cause the one or more processing units (101) to perform method steps according to any of the claims 1 to 10.

**13.** A computer readable medium on which program code sections of a computer program are saved, the program code sections being loadable into and/or executable in a system (100) to make the system (100) execute the method steps according to any one of the claims 1 to 10 when the program code sections are executed in the system (100).

**Patentansprüche**

**1.** Verfahren (200) zum Bestimmen einer Qualität eines Benutzererlebnisses eines Produkts, wobei das Verfahren (200) umfasst:

Erzeugen, durch eine Verarbeitungseinheit (101), eines Evaluationsberichts des Benutzererlebnisses des Produkts;

Empfangen, durch die Verarbeitungseinheit (101), des Evaluationsberichts des Benutzererlebnisses des Produkts, wobei der Evaluationsbericht eine Mehrzahl von Evaluationskennzahlen enthält;

Abbilden, unter Verwendung eines trainierten Maschinenlernmodells (800), der Evaluationskennzahlen des Evaluationsberichts auf wenigstens einen Parameter aus einem Satz von mit dem Produkt verknüpften Parametern, wobei die Parameter das Benutzererlebnis des Produkts beeinflussen;

Berechnen, durch das trainierte Maschinenlernmodell (800), einer mit dem wenigstens einen Parameter verknüpften Punktzahl basierend auf den abgebildeten Evaluationskennzahlen;

Bestimmen, durch die Verarbeitungseinheit (101), einer kumulativen Punktzahl, die mit dem Benutzererlebnis des Produkts verknüpft ist, basierend auf der berechneten, mit dem wenigstens einen Parameter verknüpften Punktzahl; und

Bestimmen, durch die Verarbeitungseinheit (101), der mit dem Benutzererlebnis des Produkts verknüpften Qualität basierend auf der kumulativen Punktzahl;

wobei der Evaluationsbericht des Benutzererlebnisses des Produkts automatisch durch die Verarbeitungseinheit basierend auf einer automatisierten Analyse der mit dem Produkt verknüpften Parameter erzeugt wird, wobei die Verarbeitungseinheit dafür ausgelegt ist, einen Satz von mit dem Produkt verknüpften automatisierten Aufgaben durchzuführen, auf deren Grundlage der Evaluationsbericht erzeugt wird, und wobei die Aufgaben so ausgewählt werden, dass die Leistung des Produkts evaluiert wird, so dass jeder mit dem Produkt verknüpfte Parameter evaluiert wird.

**2.** Verfahren (200) nach Anspruch 1, ferner das Erzeugen, durch das trainierte Maschinenlernmodell (800), einer Empfehlung umfassend, die wenigstens eine Maßnahme zur Verbesserung der Qualität des Benutzererlebnisses des Produkts anzeigt.

**3.** Verfahren (200) nach Anspruch 2, wobei die Parameter Funktionalität, Benutzerfreundlichkeit, Zuverlässigkeit, Nutzungskomfort und/oder Attraktivitäts-/Begeisterungsparameter umfassen.

**4.** Verfahren (200) nach Anspruch 3, wobei jeder Parameter mehrere verknüpfte Attribute aufweist, die den Parameter definieren, wobei

der Parameter Funktionalität die Attribute Organisation von Informationen, Verfügbarkeit relevanter Informationen, wahrgenommene Genauigkeit des mit dem Produkt verknüpften Merkmals, Verständlichkeit des Merkmals, Auffindbarkeit des Merkmals, Informationsarchitektur, Transparenz und Nachvollziehbarkeit des Merkmals, Vorhersehbarkeit, Sortierbarkeit, Systemrückmeldung, Hardwarekompatibilität, Softwarekompatibilität, semantische Kompatibilität, Hilfe- und Dokumentationsqualität/Relevanz, Aufgabenunterstützung, Informationshierarchie und/oder Verarbeitungsgeschwindigkeit beinhaltet;
der Parameter Benutzerfreundlichkeit die Attribute Einfachheit der Benutzung/Effizienz des Produkts/Merkmals, Installation und Aufrüstung, Einprägsamkeit/Lernbarkeit, minimaler Handlungsbedarf und/oder Steuerbarkeit beinhaltet;
der Zuverlässigkeitsparameter die Attribute Sichtbarkeit von Systemzuständen, Fehlersichtbarkeit, Fehlervermeidung, Fehlerbehebung, Vertraulichkeit/Integrität, Sicherheit und Datenschutz und/oder Software-Logo/Marke/Ikonographie beinhaltet;
der Parameter Nutzungskomfort die Attribute mentaler Bedarf, zeitlicher Bedarf, Leistung, Abbildung des mentalen Modells, Anpassbarkeit und/oder Zugänglichkeit beinhaltet;
der Attraktivitäts-/Begeisterungsparameter die Attribute Angemessenheit des Designs, Software-Farbschema, Zufriedenheit, visuelle Unübersichtlichkeit, Konsistenz der Abstände und der Schriftart, Angemessenheit des Titels, Hierarchie der Überschriften, Präsentation, Animation, taktile Übergänge und Interaktionen, Ton und/oder Frustration beinhaltet.

**5.** Verfahren (200) nach Anspruch 3 oder 4 und Anspruch 2, wobei das Erzeugen der Empfehlung, die wenigstens eine Maßnahme zur Verbesserung der Qualität des Benutzererlebnisses des Produkts anzeigt, umfasst:

Identifizieren, durch das trainierte Maschinenlernmodell (800), eines oder mehrerer Attribute, die mit jedem der Parameter aus einer Datenbank verknüpft sind;

Bestimmen, durch das trainierte Maschinenlernmodell (800), wenigstens eines der ein oder mehreren Attribute, die zu einer niedrigen Punktzahl beitragen, die mit dem Parameter verknüpft ist, basierend auf den Evaluationskennzahlen im Evaluationsbericht; und
Erzeugen, durch das trainierte Maschinenlernmodell (800), der Empfehlung zur Verbesserung der mit dem Parameter verknüpften Punktzahl, wobei die Empfehlung wenigstens eine Aktion basierend auf dem bestimmten Attribut umfasst.

**6.** Verfahren (200) nach Anspruch 5, wobei das Bestimmen des wenigstens einen der ein oder mehreren Attribute, die zu der niedrigen Punktzahl beitragen, die mit dem Parameter verknüpft ist, umfasst:

Berechnen einer Attributpunktzahl, die mit jedem der ein oder mehreren mit dem Parameter verknüpften Attribute verknüpft ist;
Vergleichen der Attributpunktzahl mit einem vordefinierten Schwellenwert; und
Identifizieren des wenigstens einen Attributs, dessen Attributpunktzahl niedriger als der vordefinierte Schwellenwert ist.

**7.** Verfahren (200) nach einem der Ansprüche 1 - 6, wobei das Bestimmen der mit dem Benutzererlebnis des Produkts verknüpften Qualität umfasst:

Vergleichen der kumulativen Punktzahl mit einem ersten Qualitätsschwellenwert, einem zweiten Qualitätsschwellenwert, einem dritten Qualitätsschwellenwert und einem vierten Qualitätsschwellenwert;
wenn die kumulierte Punktzahl für den wenigstens einen Parameter über oder gleich dem ersten Qualitätsschwellenwert ist, Bestimmen der mit dem Benutzererlebnis verknüpften Qualität als sehr gut;
wenn die kumulierte Punktzahl für den wenigstens einen Parameter unter oder gleich dem zweiten Qualitätsschwellenwert ist, Bestimmen der mit dem Benutzererlebnis verknüpften Qualität als gut;
wenn die kumulierte Punktzahl für den wenigstens einen Parameter unter oder gleich dem dritten Qualitätsschwellenwert ist, Bestimmen der mit dem Benutzererlebnis verknüpften Qualität als ausreichend; und
wenn die kumulierte Punktzahl für den wenigstens einen Parameter unter oder gleich dem vierten Qualitätsschwellenwert ist, Bestimmen der mit dem Benutzererlebnis verknüpften Qualität als ungenügend.

**8.** Verfahren (200) nach Anspruch 7, ferner umfassend:

Vergleichen der berechneten Punktzahl mit einem ersten Parameter-Qualitätsschwellenwert, einem zweiten Parameter-Qualitätsschwellenwert, einem dritten Parameter-Qualitätsschwellenwert und einem vierten Parameter-Qualitätsschwellenwert;

wenn die berechnete Punktzahl für den wenigstens einen Parameter über oder gleich dem ersten Parameter-Qualitätsschwellenwert ist, Bestimmen der mit dem Benutzererlebnis verknüpften Qualität als sehr gut;

wenn die berechnete Punktzahl für den wenigstens einen Parameter unter oder gleich dem zweiten Parameter-Qualitätsschwellenwert ist, Bestimmen der mit dem Benutzererlebnis verknüpften Qualität als gut;

wenn die berechnete Punktzahl für den wenigstens einen Parameter unter oder gleich dem dritten Parameter-Qualitätsschwellenwert ist, Bestimmen der mit dem Benutzererlebnis verknüpften Qualität als ausreichend; und

wenn die berechnete Punktzahl für den wenigstens einen Parameter unter oder gleich dem ersten Parameter-Qualitätsschwellenwert ist, Bestimmen der mit dem Benutzererlebnis verknüpften Qualität als ungenügend.

9.  Verfahren (200) nach einem der Ansprüche 1 - 8, ferner das Trainieren des Maschinenlernmodells (800) zum Bestimmen der mit dem Benutzererlebnis des Produkts verknüpften Qualität umfassend.

10.  Verfahren (200) nach einem der vorhergehenden Ansprüche, wobei das Maschinenlernmodell (800) ein tiefes neuronales Netz ist.

11.  Vorrichtung (100) zum Bestimmen einer Qualität eines Benutzererlebnisses eines Produkts, wobei die Vorrichtung (100) umfasst:

eine oder mehrere Verarbeitungseinheiten (101); und

einen Speicher (102), der mit den ein oder mehreren Verarbeitungseinheiten (101) gekoppelt ist, wobei der Speicher ein Qualitätsmodul (110) umfasst, das dafür ausgelegt ist, die Verfahrensschritte nach einem der Ansprüche 1 bis 10 unter Verwendung des wenigstens einen trainierten Maschinenlernmodells (800) auszuführen.

12.  Computerprogrammprodukt, maschinenlesbare Anweisungen umfassend, die bei Ausführung durch eine oder mehrere Verarbeitungseinheiten (101) die ein oder mehreren Verarbeitungseinheiten (101) zum Ausführen von Verfahrensschritten nach einem der Ansprüche 1 bis 10 veranlassen.

13.  Computerlesbares Medium, auf dem Programmcodeabschnitte eines Computerprogramms gespeichert sind, wobei die Programmcodeabschnitte in ein System (100) geladen und/oder von diesem ausgeführt werden können, um das System (100) zum Ausführen der Verfahrensschritte nach einem der Ansprüche 1 bis 10 zu veranlassen, wenn die Programmcodeabschnitte im System (100) ausgeführt werden.

## Revendications

1.  Procédé (200) de détermination d'une qualité de l'expérience d'un utilisateur d'un produit, le procédé (200) comprenant :

la génération, par une unité de traitement (101), d'un rapport d'évaluation de l'expérience utilisateur du produit ;
la réception, par l'unité de traitement (101), du rapport d'évaluation de l'expérience utilisateur du produit, le rapport d'évaluation comprenant une pluralité de mesures d'évaluation ;
la mise en correspondance, à l'aide d'un modèle d'apprentissage automatique entraîné (800), des mesures d'évaluation du rapport d'évaluation avec au moins un paramètre d'un ensemble de paramètres associés au produit, les paramètres affectant l'expérience utilisateur du produit ;
le calcul, à l'aide du modèle d'apprentissage automatique entraîné (800), d'un score associé à l'au moins un paramètre sur la base des mesures d'évaluation mises en correspondance ;
la détermination, par l'unité de traitement (101), d'un score cumulé associé à l'expérience utilisateur du produit sur la base du score calculé associé à l'au moins un paramètre ; et
la détermination, par l'unité de traitement (101), de la qualité associée à l'expérience utilisateur du produit sur la base du score cumulé ;
le rapport d'évaluation de l'expérience utilisateur du produit étant automatiquement généré par l'unité de traitement sur la base d'une analyse automatisée des paramètres associés au produit, l'unité de traitement étant configurée pour réaliser un ensemble de tâches automatisées associées au produit, sur la base desquelles le rapport d'évaluation est généré, et les tâches étant choisies de manière à évaluer les performances du produit, de telle sorte que chaque paramètre associé au produit est évalué.

2.  Procédé (200) selon la revendication 1, comprenant en outre la génération, par le modèle d'apprentissage automatique entraîné (800), d'une recommandation indiquant au moins une action pour améliorer la qualité de l'expérience utilisateur du produit.

3. Procédé (200) selon la revendication 2, les paramètres comprenant des paramètres de fonctionnalité, d'utilisabilité, de fiabilité, de commodité d'utilisation, et/ou d'attrait/plaisir.

4. Procédé (200) selon la revendication 3, chaque paramètre ayant une pluralité d'attributs associés définissant le paramètre,

le paramètre de fonctionnalité ayant pour attributs l'organisation des informations, la disponibilité des informations pertinentes, la précision perçue de la caractéristique associée au produit, la compréhensibilité de la caractéristique, la possibilité de recherche de la caractéristique, l'architecture des informations, la transparence et la traçabilité de la caractéristique, la prévisibilité, la possibilité de tri, le retour d'information du système, la compatibilité matérielle, la compatibilité logicielle, la compatibilité sémantique, la qualité/pertinence de l'aide et de la documentation, l'aide à la tâche, la hiérarchie des informations et/ou la rapidité de traitement ; le paramètre d'utilisabilité ayant pour attributs la facilité d'utilisation/l'efficacité du produit/de la fonctionnalité, l'installation et la mise à jour, la mémorisation/l'apprentissage, l'exigence d'une action minimale et/ou la contrôlabilité ; le paramètre de fiabilité ayant les attributs suivants : visibilité de l'état du système, visibilité des erreurs, prévention des erreurs, rectification des erreurs, confidentialité/intégrité, sécurité et respect de la vie privée, et/ou logo/marque/iconographie du logiciel ; le paramètre de commodité d'utilisation ayant pour attributs la demande mentale, la demande temporelle, la performance, la cartographie du modèle mental, la personnalisation et/ou l'accessibilité ; le paramètre d'attrait/plaisir ayant pour attributs la pertinence de la conception, la palette de couleurs du logiciel, la satisfaction, l'encombrement visuel, la cohérence de l'espacement et de la police, la pertinence du titre, la hiérarchie de l'en-tête, la présentation, l'animation, les transitions et les interactions tactiles, le son et/ou la frustration.

5. Procédé (200) selon la revendication 3 ou 4 et la revendication 2, la génération de la recommandation indiquant au moins une action pour améliorer la qualité de l'expérience utilisateur du produit comprenant :

l'identification, par le modèle d'apprentissage automatique entraîné (800), d'un ou plusieurs attributs associés à chacun des paramètres à partir d'une base de données ; la détermination, à l'aide du modèle d'apprentissage automatique entraîné (800), d'au moins l'un des attributs contribuant à une note faible associée au paramètre, sur la base des mesures d'évaluation dans le rapport d'évaluation ; et la génération, par le modèle d'apprentissage automatique entraîné (800), de la recommandation d'améliorer la note associée au paramètre, la recommandation comprenant au moins une action basée sur l'attribut déterminé.

6. Procédé (200) selon la revendication 5, la détermination de l'au moins un du ou des attributs contribuant au faible score associé au paramètre comprenant :

le calcul d'un score d'attribut associé à chacun du ou des attributs associés au paramètre ; la comparaison du score d'attribut à un seuil prédéfini ; et l'identification de l'au moins un attribut dont le score est inférieur au seuil prédéfini.

7. Procédé (200) selon l'une quelconque des revendications 1 à 6, la détermination de la qualité associée à l'expérience utilisateur du produit comprenant :

la comparaison du score cumulé avec un premier seuil de score de qualité, un deuxième seuil de score de qualité, un troisième seuil de score de qualité et un quatrième seuil de score de qualité ; si le score cumulé pour l'au moins un paramètre est supérieur ou égal au premier seuil de score de qualité, la qualité associée à l'expérience utilisateur est déterminée comme forte ; si le score cumulé pour l'au moins un paramètre est inférieur ou égal au deuxième seuil de score de qualité, la qualité associée à l'expérience utilisateur est déterminée comme bonne ; si le score cumulé pour l'au moins un paramètre est inférieur ou égal au troisième seuil de score de qualité, la qualité associée à l'expérience utilisateur est déterminée comme moyenne ; et si le score cumulé pour l'au moins un paramètre est inférieur ou égal au quatrième seuil de score de qualité, la qualité associée à l'expérience utilisateur est déterminée comme médiocre.

8. Procédé (200) selon la revendication 7, comprenant en outre :

la comparaison du score calculé avec un premier seuil de score de qualité de paramètre, un deuxième seuil de score de qualité de paramètre, un troisième seuil de score de qualité de paramètre et un quatrième seuil de score de qualité de paramètre ;

si le score calculé pour l'au moins un paramètre est supérieur ou égal au premier seuil de score de qualité de paramètre, la qualité associée au paramètre est déterminée comme forte ;

si le score calculé pour l'au moins un paramètre est inférieur ou égal au deuxième seuil de score de qualité de paramètre, la qualité associée au paramètre est déterminée comme bonne ;

si le score calculé pour l'au moins un paramètre est inférieur ou égal au troisième seuil de score de qualité de paramètre, la qualité associée au paramètre est déterminée comme moyenne ; et

si le score calculé pour l'au moins un paramètre est inférieur ou égal au quatrième seuil de score de qualité de paramètre, la qualité associée au paramètre est déterminée comme médiocre.

9. Procédé (200) selon l'une quelconque des revendications 1 à 8, comprenant en outre l'entraînement du modèle d'apprentissage automatique (800) pour déterminer la qualité associée à l'expérience utilisateur du produit.

10. Procédé (200) selon l'une quelconque des revendications précédentes, le modèle d'apprentissage automatique (800) étant un réseau neuronal profond.

11. Dispositif (100) pour déterminer une qualité de l'expérience d'un utilisateur d'un produit, le dispositif (100) comprenant :

une ou plusieurs unités de traitement (101) ; et une mémoire (102) couplée à la ou aux unités de traitement (101), la mémoire comprenant un module de qualité (110) configuré pour réaliser les étapes du procédé selon l'une quelconque des revendications 1 à 10, à l'aide d'au moins un modèle d'apprentissage automatique entraîné (800).

12. Produit de programme informatique comprenant des instructions lisibles par machine qui, lorsqu'elles sont exécutées par une ou plusieurs unités de traitement (101), amènent la ou les unités de traitement (101) à réaliser des étapes du procédé selon l'une quelconque des revendications 1 à 10.

13. Support lisible par ordinateur sur lequel des sections de code de programme d'un programme informatique sont sauvegardées, les sections de code de programme pouvant être chargées dans et/ou exécutées dans un système (100) pour amener le système (100) à exécuter les étapes du procédé selon l'une quelconque des revendications 1 à 10 lorsque les sections de code de programme sont exécutées dans le système (100).

FIG 1

FIG 2

200

FIG 3

300

FIG 4

# FIG 5

FIG 6

600

601

602 — NO → 603

YES

604 — YES → 605

NO

606 — YES → 607

NO

608 — YES → 609

NO

**FIG 7**

700

FIG 8

800

IL · ILN1 · ILN1 · ILNn

HL1 · N1 · N2 · N3 · N4 · Nn

N1

HLn · HN1 · HN2 · HN3 · HNn

OL · OLN1 · OLNn

# FIG 9

900

**Graphical User Interface** — ☐ X

File    Edit    View    Tools    Layout    Help

## The overall score of the product is 52.5% - Fair

This Experience score means:

The overall experience score of your product is Fair.
The Product is performing satisfactorily in terms of the
experience it delivers with a huge room for improvements.
Design interventions are required to transform the product
into a simplified cognitive interface

901

55%
Functional

Strong
Good
Fair
Poor

40%
Usable

55%
Delight

60%
Convenience

47%
Reliable

For parameter-wise score, please click on respective polygon.

The detailed pdf report is sent via email to you.

Retake Test

Invite a colleague to take the test | Feedback

# FIG 10

1000

**Graphical User Interface**  — □ X

File    Edit    View    Tools    Layout    Help

The overall score of the product feature
is 52.5% - Fair

55%
Functional

55%
Delight

40%
Usable

60%
Convenience

47%
Reliable

Strong
Good
Fair
Poor

55% Fair
is the Functional Score

What does this score mean ? ---------------------------------

Product partially works as intended but there are aspects that can
be improved in terms of simplified cognitive interface

What's next ? -----------------------------------

Product can be transformed into a simplified interface by incorporating
relevant functionalities that help the users accomplish their intended task.

The detailed pdf report is sent via email to you.

Retake Test

EP 4 099 250 B1

**REFERENCES CITED IN THE DESCRIPTION**

**Patent documents cited in the description**

- US 20200226479 A1
- US 20190333083 A1